(19) **Europäisches Patentamt / European Patent Office / Office européen des brevets**

(11) **EP 4 513 942 A1**

(12) **EUROPEAN PATENT APPLICATION**
published in accordance with Art. 153(4) EPC

(43) Date of publication:
**26.02.2025 Bulletin 2025/09**

(21) Application number: **22947698.1**

(22) Date of filing: **10.11.2022**

(51) International Patent Classification (IPC):
***H04W 24/02*** (2009.01)

(52) Cooperative Patent Classification (CPC):
**H04W 24/02; H04W 72/0453; H04W 84/12**

(86) International application number:
**PCT/CN2022/131222**

(87) International publication number:
**WO 2023/245962 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 CN 202210727163**
**29.09.2022 CN 202211201922**

(71) Applicant: **Huawei Technologies Co., Ltd.
Shenzhen, Guangdong 518129 (CN)**

(72) Inventors:
- **ZHAO, Yonghao**
  **Shenzhen, Guangdong 518129 (CN)**
- **RUAN, Wei**
  **Shenzhen, Guangdong 518129 (CN)**
- **WANG, Zhenzhong**
  **Shenzhen, Guangdong 518129 (CN)**
- **WANG, Shuqi**
  **Shenzhen, Guangdong 518129 (CN)**
- **PAN, Ju Yan**
  **Shenzhen, Guangdong 518129 (CN)**
- **ABEYWICKRAMA, Tharindu Samith**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **SENSING METHOD AND APPARATUS**

(57) Embodiments of this application provide a sensing method and apparatus, and relate to the field of communication technologies, to combine a sub-7 GHz frequency band and an mmWave frequency band for Wi-Fi sensing, and improve performance of sensing a Wi-Fi signal. A specific solution is: performing sensing by using both a first frequency band and a second frequency band. A frequency of the first frequency band is higher than a frequency of the second frequency band. The method includes: receiving a plurality of communication data frames in the first frequency band and a plurality of communication data frames in the second frequency band; and obtaining a plurality of pairs of communication data frames, where each of the plurality of pairs of communication data frames includes a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range. Embodiments of this application are used in a Wi-Fi sensing process.

FIG. 3

EP 4 513 942 A1

**Description**

This application claims priority to Chinese Patent Application No. 202210727163.4, filed with the China National Intellectual Property Administration on June 24, 2022 and entitled "WI-FI SENSING METHOD"; and claims priority to Chinese Patent Application No. 202211201922.X, filed with the China National Intellectual Property Administration on September 29, 2022 and entitled "SENSING METHOD AND APPARATUS", both of which are incorporated herein by reference in their entireties.

**TECHNICAL FIELD**

Embodiments of this application relate to the field of communication technologies, and in particular, to a sensing method and apparatus.

**BACKGROUND**

A wireless fidelity (Wireless Fidelity, Wi-Fi) technology is applied to the wireless sensing field, such as intrusion detection, action recognition, and gesture recognition.

Based on frequency bands, current Wi-Fi communication standards may be roughly classified into two types: a sub-7 GHz frequency band and an mmWave frequency band. In a Wi-Fi sensing technology, a higher bandwidth for receiving and sending a Wi-Fi signal indicates a finer determined range resolution of an environment and/or a human body. The sub-7 GHz frequency band is in a low frequency band and has a limited bandwidth. When applied to distance information sensing, the sub-7 GHz frequency band has a limited range resolution. In addition, when applied to motion information sensing, the sub-7 GHz frequency band has a low frequency band, a long carrier wavelength, and a small phase variation. Consequently, phase noise has large interference to motion information calculation, fineness of capturing small-amplitude motion by using the sub-7 GHz frequency band is insufficient, and performance of sensing a Wi-Fi signal in the sub-7 GHz frequency band is limited.

The mmWave frequency band has a high frequency and a high range resolution, and can capture high-precision tiny motion information, but the mmWave frequency band has a short carrier wavelength, and a large phase variation. Consequently, phase ambiguity is prone to occur, it is difficult to capture a target in large-amplitude or highspeed motion, and performance of sensing a Wi-Fi signal in the mmWave frequency band is limited.

**SUMMARY**

Embodiments of this application provide a sensing method and apparatus, to combine a sub-7 GHz frequency band and an mmWave frequency band for Wi-Fi sensing, and improve performance of sensing a Wi-Fi signal.

To achieve the foregoing objectives, the following technical solutions are used in embodiments of this application.

According to a first aspect, a sensing method is provided, where sensing is performed by using both a first frequency band and a second frequency band, a frequency of the first frequency band is higher than a frequency of the second frequency band, and the method includes: receiving a plurality of communication data frames in the first frequency band and a plurality of communication data frames in the second frequency band; and obtaining a plurality of pairs of communication data frames, where each of the plurality of pairs of communication data frames includes a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range.

In other words, a sending device for sensing may simultaneously send the communication data frame in the first frequency band and the communication data frame in the second frequency band to a receiving device. When each communication data frame carries a timestamp, the receiving device or a third-party device may match the communication data frames in the two frequency bands based on the timestamp carried in each communication data frame, to obtain the plurality of pairs of communication data frames. In this embodiment of this application, the high-frequency first frequency band usually has advantages of a high range resolution and high-precision tiny motion detection. The low-frequency second frequency band usually has an advantage of a strong phase ambiguity resistance capability. After frame matching is performed on the communication data frames in the two frequency bands, each pair of communication data frames may be combined to perform Wi-Fi sensing. In this way, Wi-Fi sensing can have the advantages of the high range resolution and high-precision tiny motion detection, and also have the advantage of the strong phase ambiguity resistance capability, to improve Wi-Fi sensing performance.

In a possible design, the first communication data frame includes the first timestamp, and the first timestamp is a sending timestamp of the first communication data frame; and the second communication data frame includes the second timestamp, and the second timestamp is a sending timestamp of the second communication data frame.

In other words, in the two frequency bands, when a time difference between the sending timestamp of the first communication data frame in the first frequency band and the sending timestamp of the second communication data frame in the second frequency band falls within the preset threshold range, the first communication data frame and the second communication data frame are matched, and are a pair of communication data frames.

Alternatively, in another possible design, two communication data frames whose sending timestamps are closest to each other in the two frequency bands may be matched into a pair of communication data frames.

Alternatively, in another possible design, when receiving the communication data frames in the two frequency bands, the receiving device may further match the communication data frames in the two frequency bands based on receiving timestamps of the communication data frames.

In a possible design, for a same target that signals in the first frequency band and the second frequency band contact in a propagation process, obtaining first phase change information between adjacent communication data frames in the plurality of communication data frames in the first frequency band.

The first phase change information between the adjacent communication data frames in the plurality of communication data frames in the first frequency band is obtained through conversion based on phase change information between adjacent communication data frames in the plurality of communication data frames in the second frequency band, a time interval between the adjacent communication data frames in the plurality of communication data frames in the first frequency band, and a time interval between the adjacent communication data frames in the plurality of communication data frames in the second frequency band.

This is because although the range resolution in the first frequency band is high, phase ambiguity is prone to occur, that is, a phase ambiguity resistance capability is poor. Therefore, the phase change information between the consecutive communication data frames can be obtained in the second frequency band. Based on the foregoing matching of the communication data frames in the two frequency bands, in this application, the phase change information in the first frequency band can be obtained by converting the phase change information in the second frequency band. For each pair of communication data frames, it is equivalent to combining the advantage of the strong phase ambiguity resistance capability of the second frequency band with the advantages of the high range resolution and high-precision tiny motion detection of the first frequency band. This can improve performance of sensing a Wi-Fi signal.

In a possible design, the adjacent communication data frames in the plurality of communication data frames in the first frequency band include a third communication data frame and a fourth communication data frame, the adjacent communication data frames in the plurality of communication data frames in the second frequency band include a fifth communication data frame and a sixth communication data frame, the third communication data frame and the fifth communication data frame are a pair of communication data frames in the plurality of pairs of communication data frames, and the fourth communication data frame and the sixth communication data frame are a pair of communication data frames in the plurality of pairs of communication data frames.

A manner of calculating the first phase change information between the third communication data frame and the fourth communication data frame include:

$$\Delta\Phi_1 = \Delta\Phi_2 \times \frac{\lambda_2}{\lambda_1} \times \frac{\Delta t_1}{\Delta t_2}.$$

$\Delta\Phi\_1$ represents the first phase change information between the third communication data frame and the fourth communication data frame, $\Delta\Phi\_2$ represents phase change information between the fifth communication data frame and the sixth communication data frame, $\Delta t\_1$ represents a time interval between a timestamp of the third communication data frame and a timestamp of the fourth communication data frame, $\Delta t\_2$ represents a time interval between a timestamp of the fifth communication data frame and a timestamp of the sixth communication data frame, $\lambda\_1$ represents a subcarrier wavelength in the first frequency band, and $\lambda\_2$ represents a subcarrier wavelength in the second frequency band.

In a possible design, for the same target that the signals in the first frequency band and the second frequency band contact in the propagation process, determining second phase change information between the adjacent communication data frames in the plurality of communication data frames in the first frequency band based on the first phase change information between the adjacent communication data frames in the plurality of communication data frames in the first frequency band.

The second phase change information is obtained through calculation based on a relationship between a coefficient and original phase change information between the adjacent communication data frames in the plurality of communication data frames in the first frequency band.

The coefficient indicates that a phase difference between the second phase change information and the original phase change information is an integer multiple of $2\pi$, and $\pi$ is a pi constant.

In a possible design, based on the first phase change information between the third communication data frame and the fourth communication data frame, the coefficient is represented as:

$$k' = \text{round}\left(\frac{\Delta\Phi_1 - (\Phi_1^{n+1} - \Phi_1^n)}{2\pi}\right).$$

k' represents the coefficient, $\Phi_1^{n+1} - \Phi_1^n$ represents a phase difference between original phase information of the third communication data frame and original phase information of the fourth communication data frame, n is an integer, and round () represents a round-off operation.

This is because the first phase change information that is in the first frequency band and that is obtained through conversion is still greatly affected by phase noise. Generally, a difference between the phase change information that is in the first frequency band and that is obtained through conversion and a phase difference between communication data frames actually detected in the second frequency band is an integer multiple of $2\pi$. To remove the phase noise of the phase change information that is in the first frequency band and that is obtained through conversion as much as possible, in this application, the original phase information with high fineness in the consecutive communication data frames corresponding to the first frequency band can be further used to optimize the phase change information in the first frequency band.

In a possible design, the first frequency band is an mmWave frequency band, and the second frequency band is a sub-7 GHz frequency band. The sub-7 GHz frequency band is in a low frequency band and has a limited bandwidth. When applied to distance information sensing, the sub-7 GHz frequency band has a limited range resolution. Although large-amplitude motion can be captured, fineness of capturing small-amplitude motion is insufficient. The mmWave frequency band is in a high frequency band, and has a high frequency, a short carrier wavelength, and a high range resolution. The mmWave frequency band has an advantage of a strong phase ambiguity resistance capability.

According to a second aspect, a sensing apparatus is provided, where sensing is performed by using both a first frequency band and a second frequency band, a frequency of the first frequency band is higher than a frequency of the second frequency band, and the sensing apparatus includes: a receiving unit, configured to receive a plurality of communication data frames in the first frequency band and a plurality of communication data frames in the second frequency band; and a data frame matching unit, configured to obtain a plurality of pairs of communication data frames, where each of the plurality of pairs of communication data frames includes a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range.

For beneficial effect of the second aspect, refer to the description of the first aspect.

In a possible design, the first communication data frame includes the first timestamp, and the first timestamp is a sending timestamp of the first communication data frame; and the second communication data frame includes the second timestamp, and the second timestamp is a sending timestamp of the second communication data frame.

In a possible design, the apparatus further includes a phase obtaining unit, configured to: for a same target that signals in the first frequency band and the second frequency band contact in a propagation process, obtain first phase change information between adjacent communication data frames in the plurality of communication data frames in the first frequency band, where the first phase change information between the adjacent communication data frames in the plurality of communication data frames in the first frequency band is obtained through conversion based on phase change information between adjacent communication data frames in the plurality of communication data frames in the second frequency band, a time interval between the adjacent communication data frames in the plurality of communication data frames in the first frequency band, and a time interval between the adjacent communication data frames in the plurality of communication data frames in the second frequency band.

In a possible design, the adjacent communication data frames in the plurality of communication data frames in the first frequency band include a third communication data frame and a fourth communication data frame, the adjacent communication data frames in the plurality of communication data frames in the second frequency band include a fifth communication data frame and a sixth communication data frame, the third communication data frame and the fifth communication data frame are a pair of communication data frames in the plurality of pairs of communication data frames, and the fourth communication data frame and the sixth communication data frame are a pair of communication data frames in the plurality of pairs of communication data frames; and a manner of calculating the first phase change information between the third communication data frame and the fourth communication data frame includes:

$$\Delta\Phi_1 = \Delta\Phi_2 \times \frac{\lambda_2}{\lambda_1} \times \frac{\Delta t_1}{\Delta t_2}.$$

$\Delta\Phi_1$ represents the first phase change information between the third communication data frame and the fourth communication data frame, $\Delta\Phi_2$ represents phase change information between the fifth communication data frame and the sixth communication data frame, $\Delta t_1$ represents a time interval between a timestamp of the third communication data frame and a timestamp of the fourth communication data frame, $\Delta t_2$ represents a time interval between a timestamp of the fifth communication data frame and a timestamp of the sixth communication data frame, $\lambda_1$ represents a subcarrier wavelength in the first frequency band, and $\lambda_2$ represents a subcarrier wavelength in the second frequency band.

In a possible design, the phase obtaining unit is further configured to: for the same target that the signals in the first frequency band and the second frequency band contact in the propagation process, determine second phase change information between the adjacent communication data frames in the plurality of communication data frames in the first frequency band based on the first phase change information between the adjacent communication data frames in the plurality of communication data frames in the first frequency band.

The second phase change information is obtained through calculation based on a relationship between a coefficient and original phase change information between the adjacent communication data frames in the plurality of communication data frames in the first frequency band; and the coefficient indicates that a phase difference between the second phase change information and the original phase change information is an integer multiple of $2\pi$, and $\pi$ is a pi constant.

In a possible design, based on the first phase change information between the third communication data frame and the fourth communication data frame, the coefficient is represented as:

$$k' = \text{round}\left(\frac{\Delta\Phi_1 - (\Phi_1^{n+1} - \Phi_1^n)}{2\pi}\right).$$

$k'$ represents the coefficient, $\Phi_1^{n+1} - \Phi_1^n$ represents a phase difference between original phase information of the third communication data frame and original phase information of the fourth communication data frame, n is an integer, and round () represents a round-off operation.

In a possible design, the first frequency band is an mmWave frequency band, and the second frequency band is a sub-7 GHz frequency band.

According to a third aspect, a communication apparatus is provided, including at least one processor. The at least one processor is connected to a memory, and the at least one processor is configured to read and execute a program stored in the memory, to enable the apparatus to perform the method according to any one of the first aspect or the implementations of the first aspect.

According to a fourth aspect, a chip is provided, where the chip is coupled to a memory, and is configured to read and execute program instructions stored in the memory, to implement the method according to any one of the first aspect or the implementations of the first aspect.

According to a fifth aspect, an embodiment of this application provides a sensing apparatus. The apparatus is included in an electronic device, and the apparatus has a function of implementing behavior of the electronic device according to any one of the foregoing aspects and the possible implementations of the foregoing aspects. The function may be implemented by hardware, or may be implemented by hardware executing corresponding software. The hardware or the software includes one or more modules or units corresponding to the foregoing function. For example, a receiving module or unit, a data frame matching module or unit, and a phase obtaining module or unit are included.

According to a sixth aspect, an embodiment of this application provides a computer-readable storage medium, including computer instructions. When the computer instructions are run on an electronic device, the electronic device is enabled to perform the antenna gain adjustment method according to any one of the first aspect and the possible implementations of the first aspect.

According to a seventh aspect, an embodiment of this application provides a computer program product. When the computer program product runs on a computer or a processor, the computer or the processor is enabled to perform the sensing method according to any one of the first aspect and the possible implementations of the first aspect.

According to an eighth aspect, an embodiment of this application provides a system. The system may include the sensing device and the sending device according to any possible implementation of the second aspect. The sending device may send communication data frames in two frequency bands to the sensing device. The sensing device and the sending device may perform the sensing method according to any one of the first aspect and the possible implementations of the first aspect.

It may be understood that any one of the sensing apparatus, sensing device, chip, computer-readable storage medium, computer program product, or the like provided above may be applied to the corresponding method provided above. Therefore, for beneficial effect that can be achieved by the sensing apparatus, sensing device, chip, computer-readable storage medium, computer program product, or the like, refer to beneficial effect in the corresponding method. Details are not described herein again.

These aspects or other aspects in this application are more concise and comprehensible in the following descriptions.

**BRIEF DESCRIPTION OF DRAWINGS**

FIG. 1 is a diagram of a network architecture according to an embodiment of this application;
FIG. 2 is a diagram of a network architecture in which a sending device is a router and a receiving device is a notebook computer in a Wi-Fi environment according to an embodiment of this application;
FIG. 3 is a schematic flowchart of a sensing method according to an embodiment of this application;
FIG. 4 is a schematic flowchart of a sensing method according to an embodiment of this application;
FIG. 5 is a diagram of a plurality of pairs of communication data frames obtained through matching of communication data frames in an mmWave frequency band (a first frequency band in FIG. 5) and a sub-7 GHz frequency band (a second frequency band in FIG. 5) according to an embodiment of this application;
FIG. 6 is a diagram of distance information of two targets in a sub-7 GHz frequency band and an mmWave frequency band according to an embodiment of this application;
FIG. 7 is a diagram of multipath information of a person between a sending device and a receiving device according to an embodiment of this application;
FIG. 8 is a diagram of distance information between a person and a sending device when the person is between the sending device and a receiving device according to an embodiment of this application;
FIG. 9 is a diagram of a time interval between communication data frames in a first frequency band and a second frequency band according to an embodiment of this application;
FIG. 10 is a diagram of a structure of a sensing device according to an embodiment of this application; and
FIG. 11 is a diagram of a structure of a sensing device according to an embodiment of this application.

**DESCRIPTION OF EMBODIMENTS**

For ease of understanding, some concepts related to embodiments of this application are described for reference by using examples. Details are as follows:
Millimeter wave (Millimeter wave, mmWave): a type of electromagnetic wave in a specific frequency band range, usually defined as 30 GHz to 300 GHz, and corresponding to a wavelength of 10 mm to 1 mm. Therefore, it is referred to as a millimeter wave.

Channel state information (Channel state information, CSI): In wireless communication, the CSI describes a state of a signal on each propagation path. This information describes how a signal is transmitted from a transmit end to a receive end through a channel, such as signal scattering. It represents a series of influences, such as environment fading and distance attenuation. The CSI may enable a communication system to adapt to a current channel condition, thereby providing assurance for high-reliability and high-rate communication in a multi-antenna system.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

As a widely used wireless network transmission technology, Wi-Fi has undergone multiple generations of standard evolution. Based on frequency bands, current Wi-Fi communication standards may be roughly classified into two types:

(1) a sub-7 GHz frequency band, where the sub-7 GHz frequency band includes the institute of electrical and electronics engineers (Institute of Electrical and Electronics Engineers, IEEE) 802.11 a/g/n/g, IEEE 802.11ax, and IEEE 802.11be, and mainly covers frequency bands around 2.4 GHz, 5 GHz, and 6 GHz; and
(2) a mmWave frequency band, where the mmWave frequency band includes IEEE 802.11 ad/ay, and mainly covers frequency bands around 45 GHz and 60 GHz.

In addition to communication functions, many academic studies are exploring application of a Wi-Fi technology in the wireless sensing field, for example, application to intrusion detection, action recognition, and gesture recognition.

In the Wi-Fi sensing technology, an environment and/or a human body in a propagation process of a Wi-Fi signal are/is inferred mainly by analyzing the Wi-Fi signal. A typical method is to perform inference by using CSI data specified in an existing Wi-Fi standard. The CSI data usually includes information about a plurality of orthogonal frequency division multiplexing (Orthogonal Frequency Division Multiplexing, OFDM) technology subcarriers. Information such as a direct path distance, a human body action, and breathing and heartbeat may be calculated by analyzing the CSI data.

Distance information may be analyzed based on a difference between different subcarriers at a same moment. A typical method is to perform inverse discrete Fourier transform (Inverse Discrete Fourier Transform) processing on information about all subcarriers at a same moment. A range resolution $R_{res}$ of the environment and/or the human body is related to a total bandwidth B of the signal, and a relationship between the range resolution and the total bandwidth B of the signal may be expressed as Formula (1).

$$R_{res} \propto \frac{1}{B} \tag{1}$$

It can be learned from Formula (1) that a higher total bandwidth B of the signal indicates a smaller value of the range resolution R_res, that is, a finer range resolution.

Motion information may be analyzed based on a phase change of a same carrier at consecutive observation moments, that is, Doppler effect. A typical method is to perform discrete Fourier transform (Discrete Fourier Transform, DFT) processing on phase information of subcarriers of a same frequency at continuous observation moments. Each Wi-Fi frame may be used as an observation moment, and a relationship between observed motion information $\Delta r$ of the environment and/or the human body and a phase variation $\Delta \Phi$ may be represented as Formula (2).

$$\Delta r \propto \lambda \ \Delta \Phi \tag{2}$$

$\lambda$ is a wavelength. The motion information $\Delta r$ is proportional to the phase variation $\Delta \Phi$.

For same motion information, a relationship between a phase variation $\Delta \Phi$ and a subcarrier wavelength may be expressed as Formula (3).

$$\Delta \Phi \propto \frac{1}{\lambda} \tag{3}$$

In other words, for same motion information, a shorter subcarrier wavelength indicates a larger phase variation $\Delta \Phi$. To ensure that observation is not ambiguous, it needs to be ensured that a phase variation $\Delta \Phi$ between adjacent observation moments meets a requirement of Formula (4).

$$|\Delta \Phi| < \pi \tag{4}$$

In this embodiment of this application, the distance information and the motion information may be collectively referred to as sensing information.

The motion information may be understood as speed information of the environment and/or the human body, and may be used to establish a coordinate graph, and analyze behavior, gestures, actions, and the like of the environment and/or the human body.

A current sensing technology may be analyzed based on either the sub-7 GHz frequency band or the mmWave frequency band, but the two frequencies have their own defects.

The sub-7 GHz frequency band is in a low frequency band and has a limited bandwidth. Currently, the known maximum standard bandwidth is 320 MHz. When applied to distance information sensing, the sub-7 GHz frequency band has a limited range resolution. In addition, when applied to motion information sensing, the sub-7 GHz frequency band has a low frequency band, and a long carrier wavelength. According to Formula (2) above, phase noise $\Phi$_e has large interference to motion information calculation. Although the sub-7 GHz frequency band has an advantage of a strong phase ambiguity resistance capability, fineness of capturing small-amplitude motion is insufficient.

The mmWave frequency band is in a high frequency band, and has a high frequency, a short carrier wavelength, and a high range resolution, and can capture small-amplitude motion. However, it can be learned from Formulas (3) and (4) above that, when applied to motion information sensing, the mmWave frequency band cannot capture large-amplitude motion, and phase ambiguity is prone to occur.

In view of this, this application provides a Wi-Fi sensing method combining a high frequency band and a low frequency band, so that advantages of the two frequency bands can be complementary, to improve performance of sensing a Wi-Fi signal.

In some embodiments, in this application, the sub-7 GHz frequency band and the mmWave frequency band may be combined to perform Wi-Fi sensing. Frames in the two frequency bands are matched based on timestamps, and an advantage of a strong phase ambiguity resistance capability of the sub-7 GHz frequency band is combined with an advantage of a high range resolution and high-precision tiny motion detection of the mmWave frequency band, to improve performance of sensing a Wi-Fi signal.

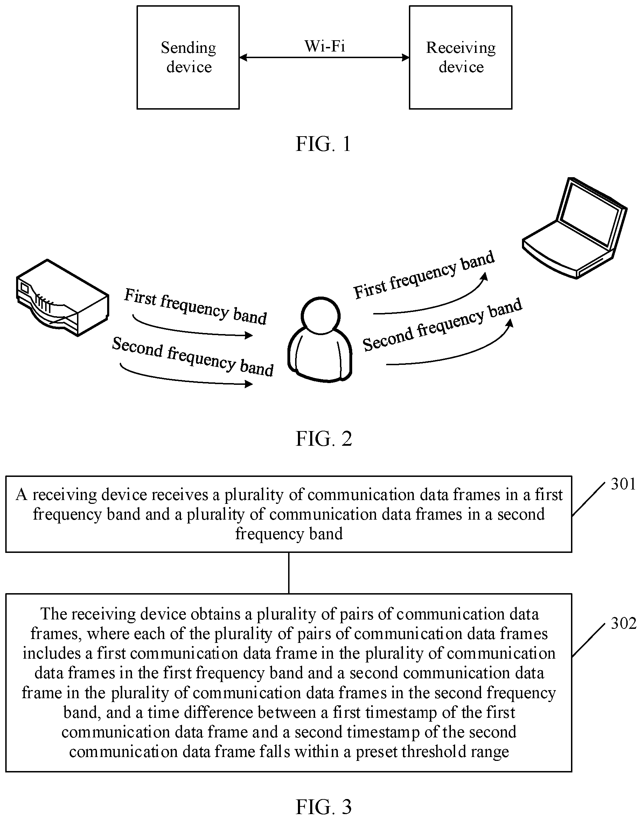

FIG. 1 shows a network architecture according to an embodiment of this application. The network architecture to which the sensing method provided in this application is applied may include a sending device and a receiving device. A signal may be transmitted between the sending device and the receiving device through Wi-Fi. A signal sent by the sending device may be transmitted to the receiving device through an environment and/or a human body. The sending device or the receiving device may perform sensing by reflecting a signal in an environment and/or a human body, to determine distance information, motion information, and the like. Alternatively, a third-party device may be used to obtain a signal obtained by reflecting a Wi-Fi signal sent by the sending device in an environment and/or a human body, to perform sensing.

For example, the sending device and the receiving device may be devices such as a mobile phone, a router, and a notebook computer, and may support Wi-Fi communication in both a high frequency band and a low frequency band. For example, Wi-Fi communication in a sub-7 GHz frequency band and an mmWave frequency band is supported. When communication in the sub-7 GHz frequency band and communication in the mmWave frequency band are enabled at the same time, the sending device and the receiving device may enter a multi-frequency high data rate mode.

For example, FIG. 2 shows a network architecture in which a sending device is a router and a receiving device is a notebook computer in a Wi-Fi environment. The router may simultaneously send a communication data frame in an mmWave frequency band (a first frequency band in FIG. 2) and a communication data frame in a sub-7 GHz frequency band (a second frequency band in FIG. 2) to the notebook computer. The communication data frames in the two frequency bands may pass through a human body, and a distance, an action, breathing and heartbeat, and the like of the human body may be sensed by reflecting the communication data frames on the human body. The router or the notebook computer may be used as a sensing device to sense the distance, the action, the breathing and heartbeat, and the like of the human body, or a third-party device may be used as a sensing device to obtain the communication data frames in the two frequency bands, and sense the distance, the action, the breathing and heartbeat, and the like of the human body.

The following describes embodiments of this application by using the network architecture in embodiments of this application.

FIG. 3 is a schematic flowchart of a sensing method according to an embodiment of this application. In the method, sensing is performed by using both a first frequency band and a second frequency band, a frequency of the first frequency band is higher than a frequency of the second frequency band, and the method includes the following procedures.

301: A receiving device receives a plurality of communication data frames in the first frequency band and a plurality of communication data frames in the second frequency band.

In other words, the receiving device may simultaneously receive communication data frames in the two frequency bands. The communication data frame may be a data frame in Wi-Fi communication. For example, when the receiving device is the notebook computer in FIG. 2, the notebook computer may receive communication data frames in two frequency bands that are sent by the router.

302: The receiving device obtains a plurality of pairs of communication data frames, where each of the plurality of pairs of communication data frames includes a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range.

In some embodiments, the first timestamp indicates a sending timestamp of the first communication data frame, and the second timestamp indicates a sending timestamp of the second communication data frame.

When receiving communication data frames in the first frequency band and communication data frames in the second frequency band, the receiving device may perform frame matching on the communication data frames in the first frequency band and the communication data frames in the second frequency band based on the sending timestamps of the communication data frames, to obtain the plurality of pairs of communication data frames. If the time difference between the first timestamp of the first communication data frame in the first frequency band and the second timestamp of the second communication data frame in the second frequency band falls within the preset threshold range, it may be considered that the first communication data frame and the second communication data frame are a pair of communication data frames.

In this way, in this embodiment of this application, the high-frequency first frequency band usually has advantages of a high range resolution and high-precision tiny motion detection. The low-frequency second frequency band usually has an advantage of a strong phase ambiguity resistance capability. After frame matching is performed on the communication data frames in the two frequency bands, each pair of communication data frames may be combined to perform Wi-Fi sensing. In this way, Wi-Fi sensing can have the advantages of the high range resolution and high-precision tiny motion detection, and also have the advantage of the strong phase ambiguity resistance capability, to improve Wi-Fi sensing performance.

The following uses an example in which the first frequency band is an mmWave frequency band and the second frequency band is a sub-7 GHz frequency band for description.

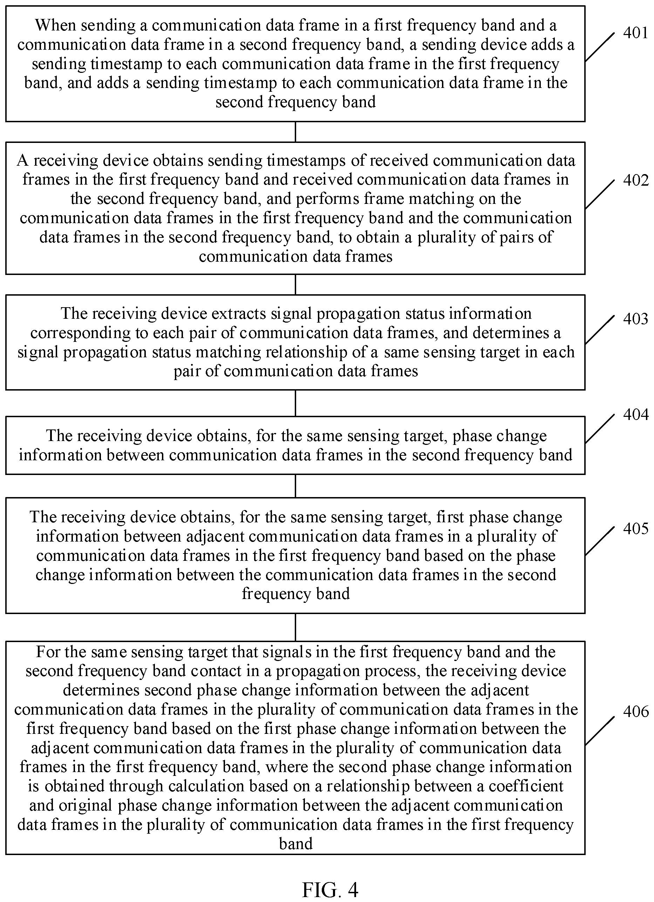

FIG. 4 is a schematic flowchart of a sensing method according to an embodiment of this application. In the method, sensing is performed by using both a sub-7 GHz frequency band and an mmWave frequency band. The method includes the following procedures.

401. When sending a communication data frame in a first frequency band and a communication data frame in a second frequency band, a sending device adds a sending timestamp to each communication data frame in the first frequency band, and adds a sending timestamp to each communication data frame in the second frequency band.

Correspondingly, a receiving device receives the communication data frame in the first frequency band and the communication data frame in the second frequency band.

For example, the sending device simultaneously sends a plurality of communication data frames in the mmWave frequency band and a plurality of communication data frames in the sub-7 GHz frequency band. When sending a first communication data frame in the mmWave frequency band, the sending device adds a sending timestamp of the first communication data frame to the first communication data frame. When sending a second communication data frame in the sub-7 GHz frequency band, the sending device adds a sending timestamp of the second communication data frame to the second communication data frame.

In other words, the first communication data frame includes a first timestamp, and the first timestamp is the sending timestamp of the first communication data frame. The second communication data frame includes a second timestamp, and the second timestamp is the sending timestamp of the second communication data frame.

The plurality of communication data frames in the mmWave frequency band are not completely the same, and the plurality of communication data frames in the sub-7 GHz frequency band are not completely the same.

402. The receiving device obtains sending timestamps of received communication data frames in the first frequency band and received communication data frames in the second frequency band, and performs frame matching on the communication data frames in the first frequency band and the communication data frames in the second frequency band, to obtain a plurality of pairs of communication data frames.

Each time a communication data frame in the mmWave frequency band is received, the receiving device obtains a sending timestamp of the communication data frame through frame decoding, and each time a communication data frame in the sub-7 GHz frequency band is received, the receiving device obtains a sending timestamp of the communication data frame through frame decoding. Then, frame matching may be performed on the communication data frames in the two frequency bands based on the sending timestamps of the communication data frames in the two frequency bands, to obtain the plurality of pairs of communication data frames.

In some embodiments, in the communication data frames in the mmWave frequency band and the sub-7 GHz frequency band, communication data frames with a time difference between sending timestamps being within a preset range may be a pair of communication data frames.

In some embodiments, in the communication data frames in the mmWave frequency band and the sub-7 GHz frequency band, two communication data frames whose sending timestamps are closest to each other may be used as a pair of communication data frames.

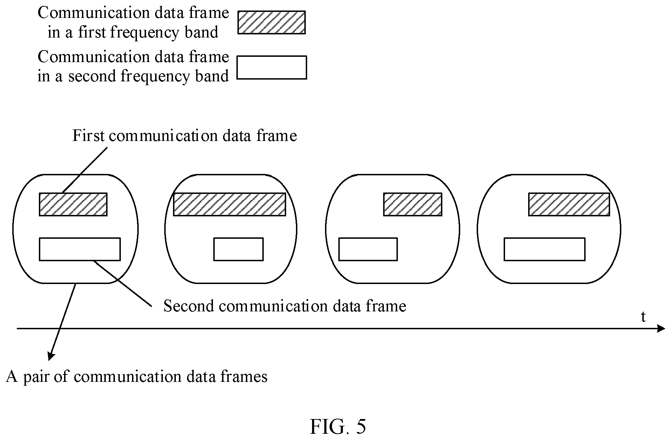

For example, FIG. 5 shows a plurality of pairs of communication data frames obtained through matching of communication data frames in the mmWave frequency band (a first frequency band in FIG. 5) and the sub-7 GHz frequency band (a second frequency band in FIG. 5). For example, a time difference between the first communication data frame in the mmWave frequency band and the second communication data frame in the sub-7 GHz frequency band falls within a preset range, or a sending timestamp of the first communication data frame is closest to a sending timestamp of the second communication data frame, the first communication data frame and the second communication data frame are a pair of communication data frames.

It should be noted that step 402 to step 406 in this application may be performed by the receiving device, or may be performed by the sending device, or may be performed by a third-party device. In other words, any one of the three devices may be used as a sensing device. If the steps are performed by the third-party device, a process in which the sending device sends the communication data frames in the two frequency bands to the receiving device is not affected, and is equivalent to a process in which the communication data frames in the two frequency bands are copied for third-party processing. In the following embodiments of this application, the receiving device is used as an example for description.

403: The receiving device extracts signal propagation status information corresponding to each pair of communication data frames, and determines a signal propagation status matching relationship of a same target in each pair of communication data frames.

After determining each pair of communication data frames, the receiving device may match signal propagation status information carried in the first communication data frame and signal propagation status information carried in the second communication data frame in each pair of communication data frames, and determine a signal propagation status matching relationship of a same target in each pair of communication data frames.

This is considering that there may be a plurality of targets in a Wi-Fi environment between the sending device and the receiving device. After a plurality of pairs of communication data frames are determined, signals for the first frequency band and the second frequency band may be in contact with a same target in a propagation process, signal propagation status information of a same target in the mmWave frequency band and the sub-7 GHz frequency band is determined.

The target in this application may be understood as an object or a human body, that is, an object or a human body that is in contact with the signals in the first frequency band and the second frequency band in a propagation process.

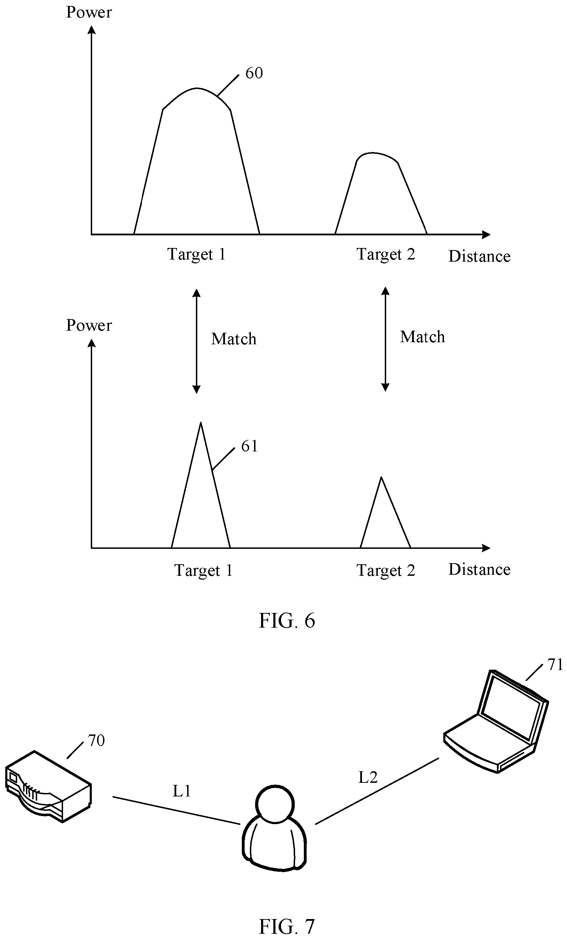

For example, FIG. 6 is a diagram of distance information of two targets in the sub-7 GHz frequency band and the mmWave frequency band. A range resolution in the sub-7 GHz frequency band is relatively rough, for example, each scale is 47 cm. A range resolution in the mmWave frequency band is relatively fine, for example, each scale is 1.74 cm. In FIG. 6, a horizontal axis represents distance information, and a vertical axis represents power. It is assumed that a target 1 in the sub-7 GHz frequency band is distance information shown by a curve 60, and the target 1 in the mmWave frequency band is distance information shown by a curve 61. Distance information of the target 1 in the two frequency bands is different, and the distance information in the mmWave frequency band is finer. The distance information shown by the curve 60 matches the distance information shown by the curve 61, and the matched distance information indicates the same target 1. A target 2 is similar to the target 1.

In some embodiments, the signal propagation status information is a propagation path length. The propagation path length may be understood as a sum of a distance from the sending device to the target and a distance from the target to the receiving device. FIG. 7 is a diagram of multipath information of a person between a sending device 70 and a receiving device 71. If distance information between the sending device 70 and the person determined in a frequency band is L1, and distance information between the person and the receiving device 71 is L2, the propagation path length may be represented as L1+L2.

For example, for each pair of communication data frames, the receiving device 71 may parse a first communication data frame in the mmWave frequency band to obtain first CSI, where the first CSI includes a first propagation path length carried in the first communication data frame, parse a second communication data frame in the sub-7 GHz frequency band to obtain second CSI, where the second CSI includes a second propagation path length carried in the second communication data frame. The first propagation path length and the second propagation path length are matched, to determine a propagation path length matching relationship of a same target in each pair of communication data frames in the mmWave frequency band and the sub-7 GHz frequency band.

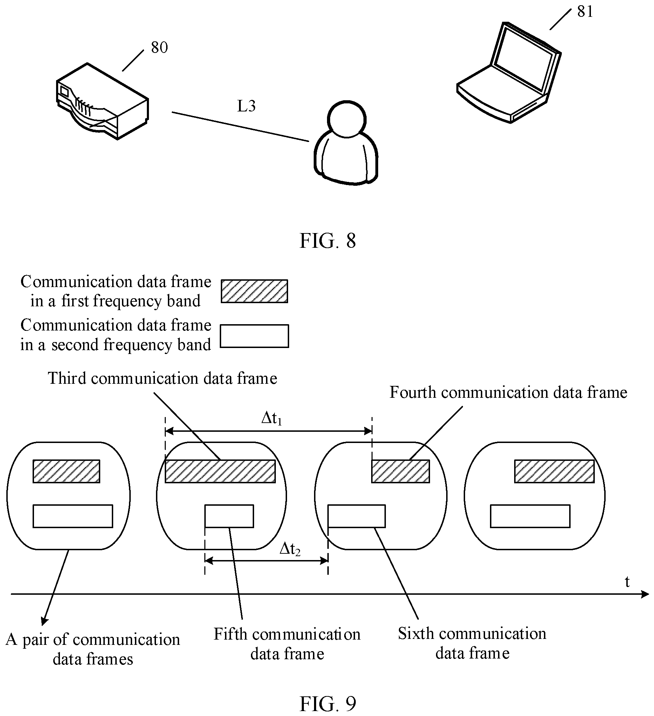

In some embodiments, the signal propagation status information is distance information between the target and the sensing device. The sensing device herein is, for example, a sending device. FIG. 8 is a diagram of distance information between a person and a sending device 80 when the person is between the sending device 80 and a receiving device 81. The distance information may be understood as distance information L3 that is between the sending device 80 and the person and that is obtained after the communication data frame sent by the sending device 80 reaches the person and the communication data frame is reflected back to the sending device 80. For example, the distance information L3 may be obtained by using a radar apparatus in the sending device 80.

For example, for each pair of communication data frames, the sending device may parse a first communication data frame in the mmWave frequency band to obtain first distance information, and parse a second communication data frame in the sub-7 GHz frequency band to obtain second distance information. The sending device matches the first distance information with the second distance information, to determine a distance information matching relationship of a same target in each pair of communication data frames.

Because bandwidths in the mmWave frequency band and the sub-7 GHz frequency band are known information specified in a standard, signal propagation status information of communication data frames in the two frequency bands may be matched according to Formula (1). Because a range resolution of the mmWave frequency band is better than a range resolution of the sub-7 GHz frequency band, the same signal propagation status information may be reflected in the sub-7 GHz frequency band with a larger error.

404: The receiving device obtains, for the same target, phase change information between communication data frames in the second frequency band.

Although the range resolution of the mmWave frequency band is high, phase ambiguity is prone to occur, that is, a phase ambiguity resistance capability is poor. Therefore, phase change information $\Delta\Phi\_sub7$ between consecutive communication data frames can be obtained in the sub-7 GHz frequency band. Because the signal propagation statuses have been matched in step 403, the same target may be first determined in the high-resolution distance information in the mmWave frequency band based on the signal propagation status, for example, a matching relationship of the distance information, and the same target in the mmWave frequency band is matched to distance information corresponding to a communication data frame in the sub-7 GHz frequency band, to extract phase information of the same target in consecutive communication data frames in the sub-7 GHz frequency band, and obtain the phase change information ΔΦ_sub7 of the same target in the sub-7 GHz frequency band. Because a wavelength of the sub-7 GHz frequency band is longer, the extracted phase change information ΔΦ_sub7 has better phase ambiguity resistance performance.

405: The receiving device obtains, for the same target, first phase change information between adjacent communication data frames in a plurality of communication data frames in the first frequency band based on the phase change information between the communication data frames in the second frequency band.

Although the phase change information ΔΦ_sub7 that is of the same target in the sub-7 GHz frequency band and that is obtained in step 404 has better phase ambiguity resistance performance, precision is poor if the phase change information ΔΦ_sub7 is directly used for motion information calculation. In this application, ΔΦ_sub7 may be optimized by using the phase information of frames in the mmWave frequency band in the plurality of pairs of communication data frames that are matched in step 402. ΔΦ_sub7 may be converted based on the wavelength and interframe space of the communication data frames, to obtain the first phase change information between adjacent communication data frames in the plurality of communication data frames in frames in the mmWave frequency band.

In other words, in this application, for a same target that signals in the first frequency band and the second frequency band contact in a propagation process, the first phase change information between the adjacent communication data frames in the plurality of communication data frames in the first frequency band is obtained.

The first phase change information between the adjacent communication data frames in the plurality of communication data frames in the first frequency band is obtained through conversion based on phase change information between adjacent communication data frames in the plurality of communication data frames in the second frequency band, a time interval between the adjacent communication data frames in the plurality of communication data frames in the first frequency band, and a time interval between the adjacent communication data frames in the plurality of communication data frames in the second frequency band.

For example, FIG. 9 is a diagram of a time interval between communication data frames in the first frequency band and the second frequency band. The adjacent communication data frames in the plurality of communication data frames in the first frequency band include a third communication data frame and a fourth communication data frame, the adjacent communication data frames in the plurality of communication data frames in the second frequency band include a fifth communication data frame and a sixth communication data frame, the third communication data frame and the fifth communication data frame are a pair of communication data frames in the plurality of pairs of communication data frames, and the fourth communication data frame and the sixth communication data frame are a pair of communication data frames in the plurality of pairs of communication data frames. A manner of calculating the first phase change information between the third communication data frame and the fourth communication data frame may be shown in Formula (5).

$$\Delta\Phi_1 = \Delta\Phi_2 \times \frac{\lambda_2}{\lambda_1} \times \frac{\Delta t_1}{\Delta t_2} \qquad \text{Formula (5)}$$

$\Delta\Phi_1$ represents the first phase change information between the third communication data frame and the fourth communication data frame, $\Delta\Phi_2$ represents phase change information between the fifth communication data frame and the sixth communication data frame, $\Delta t_1$ represents a time interval between a timestamp of the third communication data frame and a timestamp of the fourth communication data frame, $\Delta t_2$ represents a time interval between a timestamp of the fifth communication data frame and a timestamp of the sixth communication data frame, $\lambda_1$ represents a subcarrier wavelength in the first frequency band, and $\lambda_2$ represents a subcarrier wavelength in the second frequency band.

For example, the first frequency band is an mmWave frequency band, and the second frequency band is a sub-7 GHz frequency band. The receiving device may convert phase change information $\Delta t_{sub7}$ between communication data frames in the sub-7 GHz frequency band into first phase change information $\Delta\Phi_{mmW}$ between communication data frames in the mmWave frequency band based on phase change information $\Delta\Phi_{sub7}$ between communication data frames in the sub-7 GHz frequency band, a carrier wavelength $\lambda_{mmW}$ of the mmWave frequency band, a carrier wavelength $\lambda_{sub7}$ of the sub-7 GHz frequency band, a time interval $\Delta t_{mmW}$ between communication data frames in the mmWave frequency band, and a time interval $\Delta\Phi_{sub7}$ between communication data frames in the sub-7 GHz frequency band. A calculation manner of $\Delta\Phi_{mmW}$ may be shown in Formula (6).

$$\Delta\Phi_{mmW} = \Delta\Phi_{sub7} \times \frac{\lambda_{sub7}}{\lambda_{mmW}} \times \frac{\Delta t_{mmW}}{\Delta t_{sub7}} \qquad \text{Formula (6)}$$

In this way, for the same target, after the phase change information $\Phi_{mmW}$ in the mmWave frequency band is obtained by converting the phase change information $\Delta\Phi_{sub7}$ in the sub-7 GHz frequency band, it is equivalent to that for each pair of communication data frames, a strong phase ambiguity resistance advantage of the sub-7 GHz frequency band is combined with advantages of high range resolution and high-precision tiny motion detection of the mmWave frequency band. This can improve performance of sensing a Wi-Fi signal.

$\Phi_{mmW}$ obtained through conversion in step 405 is still greatly affected by phase noise. Generally, a difference

between $\Phi_{mmW}$ obtained through conversion and a phase difference between communication data frames actually detected in the mmWave frequency band is an integer multiple of $2\pi$. To remove the phase noise of $\Phi_{mmW}$ obtained through conversion as much as possible, in this application, original phase information with high fineness in consecutive communication data frames corresponding to the mmWave frequency band can be further used to optimize $\Phi_{mmW}$.

Therefore, the sensing method in this application may further include step 406.

406: For the same target that the signals in the first frequency band and the second frequency band contact in the propagation process, the receiving device determines second phase change information between the adjacent communication data frames in the plurality of communication data frames in the first frequency band based on the first phase change information between the adjacent communication data frames in the plurality of communication data frames in the first frequency band. The second phase change information is obtained through calculation based on a relationship between a coefficient and the original phase change information between the adjacent communication data frames in the plurality of communication data frames in the first frequency band.

The coefficient indicates that a phase difference between the second phase change information and the original phase change information is an integer multiple of $2\pi$, and $\pi$ is a pi constant.

Specifically, it is known that, when phase ambiguity may exist, a phase difference between $\Phi_1^n$ and original phase information $\Phi_1^{n+1}$ between any two communication data frames in the first frequency band may be represented as Formula (7).

$$\Phi_1^{n+1} - \Phi_1^n = (\Delta\Phi_1)\bmod\ (2\pi) \qquad\qquad \text{Formula (7)}$$

mod represents a modulo division operation.

In this way, $\Delta\Phi_1$ may be represented as shown in Formula (8).

$$\Delta\Phi_1 = (\Phi_1^{n+1} - \Phi_1^n) + k * 2\pi \qquad\qquad \text{Formula (8)}$$

In an ideal case, the coefficient k should be an integer. However, due to phase noise included in $\Delta\Phi_1$, the actual coefficient k may include decimal places. Therefore, the noise may be filtered out by rounding off the coefficient k.

Therefore, based on the first phase change information between any two communication data frames in the first frequency band, for example, between the third communication data frame and the fourth communication data frame, the coefficient k' may be represented by Formula (9).

$$k' = \mathrm{round}\left(\frac{\Delta\Phi_1 - (\Phi_1^{n+1} - \Phi_1^n)}{2\pi}\right) \qquad\qquad \text{Formula (9)}$$

round represents a round-off operation. k' represents an optimized coefficient, $\Phi_1^{n+1} - \Phi_1^n$ represents a phase difference between original phase information of any two communication data frames in the first frequency band, for example, a phase difference between original phase information of the third communication data frame and original phase information of the fourth communication data frame, and n is an integer.

In this way, after the coefficient k is optimized to obtain k', the optimized second phase change information between any two communication data frames in the first frequency band may be shown in Formula (10).

$$\Delta\Phi_1' = (\Phi_1^{n+1} - \Phi_1^n) + k' * 2\pi \qquad\qquad \text{Formula (10)}$$

For example, the first frequency band is an mmWave frequency band, and the second frequency band is a sub-7 GHz frequency band. Formula (7) above may be transformed as shown in Formula (11).

$$\Phi_{mmW}^{n+1} - \Phi_{mmW}^n = (\Delta\Phi_{mmW})\bmod\ (2\pi) \qquad\qquad \text{Formula (11)}$$

$\Phi_{mmW}^{n+1} - \Phi_{mmW}^n$ represents a phase difference between original phase information of any two communication data frames in the mmWave frequency band.

Formula (9) above may be transformed as shown in Formula (12).

$$k' = \mathrm{round}\left(\frac{\Delta\Phi_{mmW} - (\Phi_{mmW}^{n+1} - \Phi_{mmW}^n)}{2\pi}\right) \qquad\qquad \text{Formula (12)}$$

Therefore, the second phase change information between any two communication data frames in the mmWave frequency band may be shown in Formula (13).

$$\Delta \Phi'_{mmW} = (\Phi^{n+1}_{mmW} - \Phi^{n}_{mmW}) + k' * 2\pi \qquad (13)$$

Therefore, the motion information of the target is calculated based on $\Delta \Phi'_{mmW}$, and an advantage of the mmWave frequency band for high-precision tiny motion detection can be retained.

In this application, communication data frames in the sub-7 GHz frequency band and the mmWave frequency band may be matched based on sending timestamps, and strong ambiguity resistance performance of the sub-7 GHz frequency band can be converted into the mmWave frequency band. Phase change information between communication data frames in the mmWave frequency band is used to calculate motion information of a target, and an advantage of a strong phase ambiguity resistance capability of the sub-7 GHz frequency band can be combined with advantages of high range resolution and high-precision tiny motion detection of the mmWave frequency band. This can improve performance of sensing the Wi-Fi signal.

It should be noted that the foregoing embodiment of this application is described by using frame matching performed at sending times of communication data frames in two frequency bands received by the receiving device, but is not limited thereto. In this application, the receiving device may further calculate receiving moments of communication data frames in two frequency bands, and similar effect may also be achieved to some extent.

It may be understood that, to implement the foregoing functions, the sensing device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the sensing device may be divided into functional modules based on the foregoing method examples, for example, each functional module may be obtained through division based on each corresponding function, or two or more functions may be integrated into one processing module. The integrated module may be implemented in a form of hardware. It should be noted that module division in this embodiment is an example and is merely logical function division. In actual implementation, there may be another division manner.

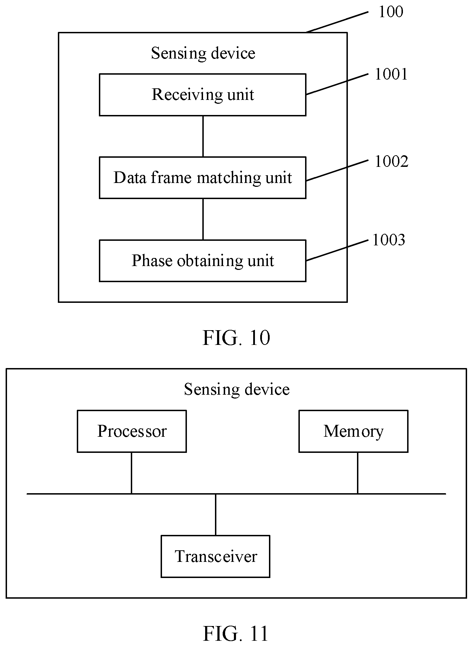

When each functional module is obtained through division based on each corresponding function, FIG. 10 is a diagram of possible composition of the sensing device 100 in the foregoing embodiment. As shown in FIG. 10, the sensing device 100 may include a receiving unit 1001, a data frame matching unit 1002, and a phase obtaining unit 1003.

The receiving unit 1001 may be configured to support the sensing device 100 in performing the foregoing step 301, step 401, and the like, and/or another process used for the technology described in this specification.

The data frame matching unit 1002 may be configured to support the sensing device 100 in performing step 302, step 402, step 403, and the like, and/or another process used for the technology described in this specification.

The phase obtaining unit 1003 may be configured to support the sensing device 100 in performing step 404, step 405, step 406, and the like, and/or another process used for the technology described in this specification.

It should be noted that all related content of the steps in the foregoing method embodiments may be cited in function description of corresponding functional modules. Details are not described herein again.

The sensing device 100 provided in this embodiment is configured to perform the foregoing sensing method, and therefore, the same effect as the foregoing implementation method can be achieved.

When an integrated unit is used, the sensing device 100 may include a processing module, a storage module, and a communication module. The processing module may be configured to control and manage an action of the sensing device 100. For example, the processing module may be configured to support the sensing device 100 in performing the steps performed by the data frame matching unit 1002 and the phase obtaining unit 1003. The storage module may be configured to support the sensing device 100 in storing program code, data, and the like, for example, storing phase change information between communication data frames. The communication module may be configured to support the sensing device 100 in communicating with another device, for example, communicating with a sending device that sends a communication data frame or a receiving device that receives a communication data frame.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor, the storage module is a memory, and the transceiver module is a transceiver, the sensing device in this embodiment may be a sensing device having a structure shown in FIG. 11.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the sensing method in the foregoing embodiments.

An embodiment of this application further provides a computer storage medium. The computer storage medium stores computer instructions. When the computer instructions are run on an electronic device, the electronic device is enabled to perform the related method steps, to implement the sensing method in the foregoing embodiments.

Embodiments of this application further provide a computer program product. When the computer program product is run on a computer, the computer is enabled to perform the foregoing related steps, to implement the sensing method performed by the electronic device in the foregoing embodiments.

In addition, embodiments of this application further provide an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the sensing method performed by the electronic device in the foregoing method embodiments.

The sensing device, the computer storage medium, the computer program product, or the chip provided in this embodiment is configured to perform the corresponding method provided above. Therefore, for beneficial effect that can be achieved by the sensing device, the computer storage medium, the computer program product, or the chip, refer to the beneficial effect in the corresponding method provided above. Details are not described herein.

Another embodiment of this application provides a system. The system may include the foregoing sending device and receiving device, and may be configured to implement the foregoing sensing method.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A sensing method, wherein sensing is performed by using both a first frequency band and a second frequency band, a frequency of the first frequency band is higher than a frequency of the second frequency band, and the method comprises:

    receiving a plurality of communication data frames in the first frequency band and a plurality of communication data frames in the second frequency band; and

    obtaining a plurality of pairs of communication data frames, wherein each of the plurality of pairs of communication data frames comprises a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range.

2. The method according to claim 1, wherein

    the first communication data frame comprises the first timestamp, and the first timestamp is a sending timestamp of the first communication data frame; and

    the second communication data frame comprises the second timestamp, and the second timestamp is a sending timestamp of the second communication data frame.

3. The method according to claim 1 or 2, wherein the method further comprises:

    for a same target that signals in the first frequency band and the second frequency band contact in a propagation process, obtaining first phase change information between adjacent communication data frames in the plurality of communication data frames in the first frequency band, wherein

    the first phase change information between the adjacent communication data frames in the plurality of communication data frames in the first frequency band is obtained through conversion based on phase change information between adjacent communication data frames in the plurality of communication data frames in the second frequency band, a time interval between the adjacent communication data frames in the plurality of communication data frames in the first frequency band, and a time interval between the adjacent communication data frames in the plurality of communication data frames in the second frequency band.

4. The method according to claim 3, wherein the adjacent communication data frames in the plurality of communication data frames in the first frequency band comprise a third communication data frame and a fourth communication data frame, the adjacent communication data frames in the plurality of communication data frames in the second frequency band comprise a fifth communication data frame and a sixth communication data frame, the third communication data frame and the fifth communication data frame are a pair of communication data frames in the plurality of pairs of communication data frames, and the fourth communication data frame and the sixth communication data frame are a pair of communication data frames in the plurality of pairs of communication data frames; and

    a manner of calculating the first phase change information between the third communication data frame and the fourth communication data frame comprises:

$$\Delta\Phi_1 = \Delta\Phi_2 \times \frac{\lambda_2}{\lambda_1} \times \frac{\Delta t_1}{\Delta t_2} ,$$

    wherein

    $\Delta\Phi_1$ represents the first phase change information between the third communication data frame and the fourth communication data frame, $\Delta\Phi_2$ represents phase change information between the fifth communication data frame and the sixth communication data frame, $\Delta t_1$ represents a time interval between a timestamp of the third communication data frame and a timestamp of the fourth communication data frame, $\Delta t_2$ represents a time interval between a timestamp of the fifth communication data frame and a timestamp of the sixth communication data frame, $\lambda_1$ represents a subcarrier wavelength in the first frequency band, and $\lambda_2$ represents a subcarrier wavelength in the second frequency band.

5. The method according to claim 4, wherein the method further comprises:

for the same target that the signals in the first frequency band and the second frequency band contact in the propagation process, determining second phase change information between the adjacent communication data frames in the plurality of communication data frames in the first frequency band based on the first phase change information between the adjacent communication data frames in the plurality of communication data frames in the first frequency band, wherein

the second phase change information is obtained through calculation based on a relationship between a coefficient and original phase change information between the adjacent communication data frames in the plurality of communication data frames in the first frequency band; and

the coefficient indicates that a phase difference between the second phase change information and the original phase change information is an integer multiple of $2\pi$, and $\pi$ is a pi constant.

6. The method according to claim 5, wherein based on the first phase change information between the third communication data frame and the fourth communication data frame, the coefficient is represented as:

$$k' = \text{round}\left(\frac{\Delta\Phi_1 - (\Phi_1^{n+1} - \Phi_1^n)}{2\pi}\right),$$

wherein

k' represents the coefficient, $\Phi_1^{n+1} - \Phi_1^n$ represents a phase difference between original phase information of the third communication data frame and original phase information of the fourth communication data frame, n is an integer, and round () represents a round-off operation.

7. The method according to any one of claims 1 to 6, wherein the first frequency band is an mmWave frequency band, and the second frequency band is a sub-7 GHz frequency band.

8. A sensing apparatus, wherein sensing is performed by using both a first frequency band and a second frequency band, a frequency of the first frequency band is higher than a frequency of the second frequency band, and the sensing apparatus comprises:

a receiving unit, configured to receive a plurality of communication data frames in the first frequency band and a plurality of communication data frames in the second frequency band; and

a data frame matching unit, configured to obtain a plurality of pairs of communication data frames, wherein each of the plurality of pairs of communication data frames comprises a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range.

9. The sensing apparatus according to claim 8, wherein

the first communication data frame comprises the first timestamp, and the first timestamp is a sending timestamp of the first communication data frame; and

the second communication data frame comprises the second timestamp, and the second timestamp is a sending timestamp of the second communication data frame.

10. The sensing apparatus according to claim 8 or 9, further comprising a phase obtaining unit, configured to:

for a same target that signals in the first frequency band and the second frequency band contact in a propagation process, obtain first phase change information between adjacent communication data frames in the plurality of communication data frames in the first frequency band, wherein

the first phase change information between the adjacent communication data frames in the plurality of communication data frames in the first frequency band is obtained through conversion based on phase change information between adjacent communication data frames in the plurality of communication data frames in the second frequency band, a time interval between the adjacent communication data frames in the plurality of communication data frames in the first frequency band, and a time interval between the adjacent communication data frames in the plurality of communication data frames in the second frequency band.

**11.** The sensing apparatus according to claim 10, wherein

the adjacent communication data frames in the plurality of communication data frames in the first frequency band comprise a third communication data frame and a fourth communication data frame, the adjacent communication data frames in the plurality of communication data frames in the second frequency band comprise a fifth communication data frame and a sixth communication data frame, the third communication data frame and the fifth communication data frame are a pair of communication data frames in the plurality of pairs of communication data frames, and the fourth communication data frame and the sixth communication data frame are a pair of communication data frames in the plurality of pairs of communication data frames; and

a manner of calculating the first phase change information between the third communication data frame and the fourth communication data frame comprises:

$$\Delta\Phi_1 = \Delta\Phi_2 \times \frac{\lambda_2}{\lambda_1} \times \frac{\Delta t_1}{\Delta t_2},$$

wherein

$\Delta\Phi_1$ represents the first phase change information between the third communication data frame and the fourth communication data frame, $\Delta\Phi_2$ represents phase change information between the fifth communication data frame and the sixth communication data frame, $\Delta t_1$ represents a time interval between a timestamp of the third communication data frame and a timestamp of the fourth communication data frame, $\Delta t_2$ represents a time interval between a timestamp of the fifth communication data frame and a timestamp of the sixth communication data frame, $\lambda_1$ represents a subcarrier wavelength in the first frequency band, and $\lambda_2$ represents a subcarrier wavelength in the second frequency band.

**12.** The sensing apparatus according to claim 11, wherein the phase obtaining unit is further configured to:

for the same target that the signals in the first frequency band and the second frequency band contact in the propagation process, determine second phase change information between the adjacent communication data frames in the plurality of communication data frames in the first frequency band based on the first phase change information between the adjacent communication data frames in the plurality of communication data frames in the first frequency band, wherein

the second phase change information is obtained through calculation based on a relationship between a coefficient and original phase change information between the adjacent communication data frames in the plurality of communication data frames in the first frequency band; and

the coefficient indicates that a phase difference between the second phase change information and the original phase change information is an integer multiple of $2\pi$, and $\pi$ is a pi constant.

**13.** The sensing apparatus according to claim 12, wherein based on the first phase change information between the third communication data frame and the fourth communication data frame, the coefficient is represented as:

$$k' = \text{round}\left(\frac{\Delta\Phi_1 - (\Phi_1^{n+1} - \Phi_1^n)}{2\pi}\right),$$

wherein

k' represents the coefficient, $\Phi_1^{n+1} - \Phi_1^n$ represents a phase difference between original phase information of the third communication data frame and original phase information of the fourth communication data frame, n is an integer, and round () represents a round-off operation.

**14.** The sensing apparatus according to any one of claims 8 to 13, wherein the first frequency band is an mmWave frequency band, and the second frequency band is a sub-7 GHz frequency band.

**15.** A computer-readable storage medium, comprising computer instructions, wherein when the computer instructions are run on an electronic device, the electronic device is enabled to perform the method according to any one of claims 1 to 7.

Sending device — Wi-Fi — Receiving device

FIG. 1

FIG. 2

A receiving device receives a plurality of communication data frames in a first frequency band and a plurality of communication data frames in a second frequency band

301

The receiving device obtains a plurality of pairs of communication data frames, where each of the plurality of pairs of communication data frames includes a first communication data frame in the plurality of communication data frames in the first frequency band and a second communication data frame in the plurality of communication data frames in the second frequency band, and a time difference between a first timestamp of the first communication data frame and a second timestamp of the second communication data frame falls within a preset threshold range

302

FIG. 3

When sending a communication data frame in a first frequency band and a communication data frame in a second frequency band, a sending device adds a sending timestamp to each communication data frame in the first frequency band, and adds a sending timestamp to each communication data frame in the second frequency band | 401

A receiving device obtains sending timestamps of received communication data frames in the first frequency band and received communication data frames in the second frequency band, and performs frame matching on the communication data frames in the first frequency band and the communication data frames in the second frequency band, to obtain a plurality of pairs of communication data frames | 402

The receiving device extracts signal propagation status information corresponding to each pair of communication data frames, and determines a signal propagation status matching relationship of a same sensing target in each pair of communication data frames | 403

The receiving device obtains, for the same sensing target, phase change information between communication data frames in the second frequency band | 404

The receiving device obtains, for the same sensing target, first phase change information between adjacent communication data frames in a plurality of communication data frames in the first frequency band based on the phase change information between the communication data frames in the second frequency band | 405

For the same sensing target that signals in the first frequency band and the second frequency band contact in a propagation process, the receiving device determines second phase change information between the adjacent communication data frames in the plurality of communication data frames in the first frequency band based on the first phase change information between the adjacent communication data frames in the plurality of communication data frames in the first frequency band, where the second phase change information is obtained through calculation based on a relationship between a coefficient and original phase change information between the adjacent communication data frames in the plurality of communication data frames in the first frequency band | 406

FIG. 4

Communication data frame
in a first frequency band

Communication data frame
in a second frequency band

First communication data frame

Second communication data frame

t

A pair of communication data frames

FIG. 5

Power

60

Target 1    Target 2    Distance

Match    Match

Power

61

Target 1    Target 2    Distance

FIG. 6

71

70

L1    L2

FIG. 7

FIG. 8

Communication data frame
in a first frequency band

Communication data frame
in a second frequency band

Third communication data frame

Fourth communication data frame

$\Delta t_1$

$\Delta t_2$

t

A pair of communication
data frames

Fifth communication
data frame

Sixth communication
data frame

FIG. 9

FIG. 10

FIG. 11

## INTERNATIONAL SEARCH REPORT

International application No.

**PCT/CN2022/131222**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

Documentation searched other than minimum documentation to the extent that such documents are included in the fields searched

IPC: H04W H04Q H04L

Electronic data base consulted during the international search (name of data base and, where practicable, search terms used)

CNPAT, CNKI, WPI, EPODOC, 3GPP: 高频, 低频, 感知, 感测, 检测, 发送, 距离, 运动, 精度, 匹配, 时间戳, 同时, 同步, Sub w GHz, mmWave, WIFI, HF, LF, detect, sense, transmit, send, receive, time, stamp, gap, synchronization

### C. DOCUMENTS CONSIDERED TO BE RELEVANT

| Category* | Citation of document, with indication, where appropriate, of the relevant passages | Relevant to claim No. |
|---|---|---|
| X | CN 111371982 A (BEIJING MOMENTA TECHNOLOGY CO., LTD.) 03 July 2020 (2020-07-03) description, paragraphs 109-159 | 1-15 |
| X | CN 113747461 A (HUAWEI TECHNOLOGIES CO., LTD.) 03 December 2021 (2021-12-03) description, paragraphs 117-159 | 1-15 |
| X | US 2018157330 A1 (GOOGLE INC.) 07 June 2018 (2018-06-07) description, paragraphs 66-71 | 1-15 |
| A | US 2011149998 A1 (NORTEL NETWORKS LTD.) 23 June 2011 (2011-06-23) entire document | 1-15 |
| A | US 2017366957 A1 (INTEL IP CORP.) 21 December 2017 (2017-12-21) entire document | 1-15 |
| A | US 2021337531 A1 (QUALCOMM INC.) 28 October 2021 (2021-10-28) entire document | 1-15 |

☑ Further documents are listed in the continuation of Box C.    ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **10 March 2023** | **15 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/131222**

**C.    DOCUMENTS CONSIDERED TO BE RELEVANT**

| Category* | Citation of document, with indication, where appropriate, of the relevant passages | Relevant to claim No. |
|---|---|---|
| A | FRAUNHOFER HHI et al. "Beam correspondence performance measurement improvements of FR2 UEs using carrier aggregation and shared antenna arrays" *3GPP TSG RAN WG4 #97-e, R4-2014492*, 13 November 2020 (2020-11-13), entire document | 1-15 |

Form PCT/ISA/210 (second sheet) (July 2022)

**INTERNATIONAL SEARCH REPORT**
Information on patent family members

International application No.

**PCT/CN2022/131222**

| Patent document cited in search report | | | Publication date (day/month/year) | Patent family member(s) | | | Publication date (day/month/year) |
|---|---|---|---|---|---|---|---|
| CN | 111371982 | A | 03 July 2020 | None | | | |
| CN | 113747461 | A | 03 December 2021 | WO | 2021244353 | A1 | 09 December 2021 |
| US | 2018157330 | A1 | 07 June 2018 | CN | 108153410 | A | 07 June 2018 |
| | | | | DE | 202017105261 | U1 | 08 March 2018 |
| | | | | WO | 2018106306 | A1 | 14 June 2018 |
| US | 2011149998 | A1 | 23 June 2011 | None | | | |
| US | 2017366957 | A1 | 21 December 2017 | None | | | |
| US | 2021337531 | A1 | 28 October 2021 | CN | 115443620 | A | 06 December 2022 |
| | | | | KR | 20230005126 | A | 09 January 2023 |
| | | | | BR | 112022020906 | A2 | 29 November 2022 |
| | | | | TW | 202147891 | A | 16 December 2021 |
| | | | | WO | 2021216388 | A1 | 28 October 2021 |

Form PCT/ISA/210 (patent family annex) (July 2022)

**REFERENCES CITED IN THE DESCRIPTION**

**Patent documents cited in the description**

- CN 202210727163

- CN 202211201922X